**Europäisches Patentamt**

**European Patent Office**

**Office européen des brevets**

(19)

(11) Veröffentlichungsnummer : **0 316 271 B1**

# EUROPÄISCHE PATENTSCHRIFT

(12)

(45) Veröffentlichungstag der Patentschrift :
**02.01.92 Patentblatt 92/01**

(51) Int. Cl.⁵ : **F02D 41/40,** F02D 41/26

(21) Anmeldenummer : **88810730.7**

(22) Anmeldetag : **26.10.88**

(54) **Verfahren zum Verändern des Zünddrucks einer selbstzündenden Hubkolben-Brennkraftmaschine und Vorrichtung zum Durchführen des Verfahrens.**

(30) Priorität : **10.11.87 CH 4370/87**

(43) Veröffentlichungstag der Anmeldung :
**17.05.89 Patentblatt 89/20**

(45) Bekanntmachung des Hinweises auf die Patenterteilung :
**02.01.92 Patentblatt 92/01**

(84) Benannte Vertragsstaaten :
**DE FR GB IT NL**

(56) Entgegenhaltungen :
**EP-A- 0 088 716**
**EP-A- 0 206 517**
**GB-A- 2 091 000**
**US-A- 3 796 197**

(56) Entgegenhaltungen :
**PATENT ABSTRACTS OF JAPAN, Band 10, Nr. 273 (M-518)[2329], 17. September 1986, Seite 93 M 518; & JP-A-61 96 151 (YANMAR DIESEL ENGINE CO. LTD)14-05-1986**
**PATENT ABSTRACTS OF JAPAN, Band 7, Nr. 102 (M-211)[1247], 30. Avril 1983, Seite 64 M 211; & JP-A-58 23 234 (HINO JIDOSHA KOGYO K.K.) 10-02-1983**
**SAE-paper 860145, 16. ISATA-Symposium, Florenz, 11.-15.05.1987, Vortrag 87010**
**Bosch, Technische Unterrichtung "Motronic", 1.Ausgabe 1983, S.43**

(73) Patentinhaber : **GEBRÜDER SULZER AKTIENGESELLSCHAFT**
**Zürcherstrasse 9**
**CH-8401 Winterthur (CH)**

(72) Erfinder : **Pernter, Wilfried**
**Chrottenbuckstrasse 19**
**CH-8450 Andelfingen (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung bezieht sich auf ein Verfahren zum Verändern des mittleren effektiven Drucks einer selbstzündenden Hubkolben-Brennkraftmaschine durch Verstellen des Einspritzbeginns der Brennstoff-Einspritzvorrichtung, bezogen auf den Drehwinkel der Kurbelwelle, wobei laufend dem momentanen Belastungszustand der Brennkraftmaschine entsprechende elektrische Signale erzeugt werden, diese Signale einer elektronischen Schaltung zugeführt werden, die einen Speicher aufweist. Weiter bezieht sich die Erfindung auf eine Vorrichtung zum Verändern des mittleren effektiven Drucks einer selbstzündenden Hubkolben-Brennkraftmaschine mit Mitteln zum Verstellen des Einspritzbeginns der Brennstoff-Einspritz vorrichtung, bezogen auf den Drehwinkel der Kurbelwelle, wobei laufend dem momentanen Belastungszustand der Brennkraftmaschine entsprechende elektrische Signale erzeugt werden, diese Signale einer elektronischen Schaltung zugeführt werden, die einen Speicher aufweist.

Grosse, selbstzündende Hubkolben-Brennkraftmaschinen, wie Dieselmotoren, verfügen in der Regel für jeden Zylinder über eine Einspritzpumpe für den Brennstoff. Die Einspritzpumpen verfügen beispielsweise über ein Saugventil und ein Überströmventil, die beide beim Einspritzbeginn und während des Einspritzens geschlossen sind. Der Einspritzvorgang wird durch Öffnen des Überströmventils beendet. Der mittlere effektive Zünddruck der Dieselmotoren wird mit Verkürzen oder Verlängern der Einspritzdauer verändert, indem das Überströmventil zu einem späteren Zeitpunkt öffnet und damit eine grössere Brennstoffmenge pro Zündtakt des Motors eingespritzt wird. Diese Veränderung der Einspritzmenge bzw. Einspritzdauer erfolgt beispielsweise bei Grossdieselmotoren, indem je nach Leistungbedarf die Exzentersteuerung des Überströmventils durch z.B. Verdrehen einer Exzenterwelle über ein Gestänge beeinflusst wird.

Um den Wirkungsgrad, d.h. die Nutzung des Brennstoffs im ganzen Betriebsbereich, zu verbessern, kann bei Dieselmotoren der Zeitpunkt des Beginns des Einspritzens, bezogen auf den Drehwinkel des Kurbelwelle, in gewissen Grenzen, bei gleichbleibender Einspritzmenge und Einspritzdauer verändert werden. Mit anderen Worten heisst das, dass der Kraftstoff in einem anderen, aber gleich grossen Drehwinkelbereich der Kurbelwelle bzw. Bereich des Kolbenweges eingespritzt wird. Von Dieselmotoren ist bekannt, wie sich der mittlere effektive Zünddruck — auch vereinfacht Zünddruck genannt — über den Belastungsbereich, durch Verändern des Einspritzbeginns verändert und wird in Zünddruckkennlinien dargestellt. Von den Motoren ist auch bekannt, bei welchem Drehwinkel der Kurbelwelle bei einer bestimmten Belastung bzw. Leistung der Einspritzvorgang erfolgen soll, um beispielsweise den besten Wirkungsgrad zu erzielen. Je nach gewünschter Betriebsart ist es also möglich, den Motor nach der dazugehörigen Zünddruckkennlinie zu betreiben. Die zeitliche Verschiebung des Einspritzens erfolgt z.B. dadurch, dass die Exzentersteuerung von Saug- und Überströmventil der Pumpe gleichsinnig als Funktion der Ausgangskennlinie beeinflusst, d.h. verändert wird. Bei bisherigen mechanischen Lösungen wird beispielsweise eine Kurvenscheibe eingesetzt, die entsprechend dem gewünschten mittleren Zünddruck positioniert wird und welche über ein Gestänge auf die Exzenterwellen des Saug- und des Überströmventils der Einspritzpumpe einwirkt. Eine Nocken- oder Steuerscheibe ist für eine ganz bestimmte Zünddruckkennlinie des Motors ausgelegt. Der Betrieb des Dieselmotors nach einer anderen Ausgangscharakteristik erfordert umfangreiche Umbau- und Einstellarbeiten und insbesondere das Stillegen des Motors. Derartige Umbauten sind kostenaufwendig und für den Betrieb störend.

In der Publikation SAE 860145 ist ein Einspritzsystem für Fahrzeug-Dieselmotoren beschrieben, bei dem Einspritzmenge und Einspritzbeginn mit verschiedenen Steuergrössen, wie Drehzahl, Gaspedalstellung, Motorlast, Wassertemperatur usw. beeinflusst werden. Diese Vorrichtung weist einen Speicher mit Steuergrössen für verschiedene Motorentypen auf, was die Einspritzsteuernung für verschiedene Fahrzeug-Motorentypen geeignet macht.

Aufgabe der Erfindung ist es, ein vereinfachtes Verfahren zu schaffen, mit dem selbstzündende Hubkolben-Brennkraftmaschinen, z.B. Dieselmotoren, wahlweise nach verschiedenen Ausgangskennlinien betrieben werden können. Erfindungsgemäss ist ein derartiges Verfahren dadurch gekennzeichnet, darin die Werte mehrerer Kennlinien des mittleren effektiven Drucks der Brennkraftmaschine gespeichert sind, und dass die elektronische Schaltung eine Schaltung aufweist, welche wahlweise, aus den gespeicherten Werten einer dieser Kennlinien Signale für die Stellung der Stellglieds zum Steuern des Einspritzbeginns mit einem ersten Ventil und des Einspritzendes mit einem zweiten Ventil erzeugt und diese Signale dem nachgeschalteten Stellglied zugeführt werden und damit dessen Position bestimmen, wobei bei gleichbleibender Last die Einspritzdauer der Einspritzvorrichtung gleich bleibt. Die abhängigen Verfahrensansprüche beziehen sich auf besonders vorteilhafte Formen des Verfahrens.

Die erfindungsgemässe Vorrichtung ist durch die Merkmale im Kennzeichen von Anspruch 4 gekennzeichnet. Sie erlaubt auf einfache Weise, das Verfahren durchzuführen. Die abhängigen Vorrichtungsansprüche beziehen sich auf besonders vorteilhafte Ausführungen derartiger Vorrichtungen.

Das Verfahren ermöglicht, Dieselmotoren ohne aufwendige Umbauarbeiten am Motor, wahlweise nach verschiedenen Kennlinien des mittleren effektiven Drucks sofort mit dem bestmöglichen Wirkungsgrad zu betreiben. Dabei ist es möglich, den Speicher in der elektronischen Schaltung auszuwechseln, die Werte der neuen Kennlinie in den Speicher einzugeben, oder die im Speicher schon vorhandenen Werte der neuen Kennlinie in die Einspritzsteuerung einzubeziehen. Das Verfahren ermöglicht aber auch die Anpassung oder Veränderung des von der Normalkurve abweichenden Bereichs der Kennlinie des mittleren effektiven Drucks, also des Bereichs, in welchem die Verschiebung des Einspritzbeginns erfolgen darf, an die gewählte Vollastposition eines Dieselmotors. Weiter ist es möglich, bei kurzzeitig ständig variierender Belastung den Lauf des Dieselmotors durch Verwenden eines Verzögerungsglieds zu beruhigen, indem die kurzzeitige Schwankungen nicht zum Verändern des Einspritzbeginns führen. Das Verfahren bringt gegenüber heutigen Lösungen mit Kurvensteuerung für die Veränderung des Einspritzbeginns, mit beispielsweise Exzenterwellen, auch den Vorteil, dass die Verstellkräfte beim Verschieben des Einspritzbeginns nicht auf den Drehwinkelgeber übertragen werden.

Nachstehend werden Beispiele des Verfahrens und der Vorrichtung anhand der Zeichnungen, näher erläutert.

Es zeigen :

Fig. 1    das Blockschema eines Beispiels einer elektronischen Schaltung zum Verstellen des auf den Drehwinkel bezogenen Zeitpunkts des Einspritzbeginns einer Brennstoff-Einspritzvorrichtung ;

Fig. 2A    schematisch eine Steuerung für einen Dieselmotor, bei welcher der Einspritzbeginn mit einem elektronisch gesteuerten Stellglied verstellbar ist, bei z.B. Nullast ;

Fig. 2B    die Lage der Hebel der Steuerung des mittleren effektiven Zünddrucks von Fig. 2A bei z.B. Vollast;

Fig. 3    schematisch ein Beispiel eines Last-Zünddruck-Diagramm mit einer Zünddruckkennlinie für einen Dieselmotor.

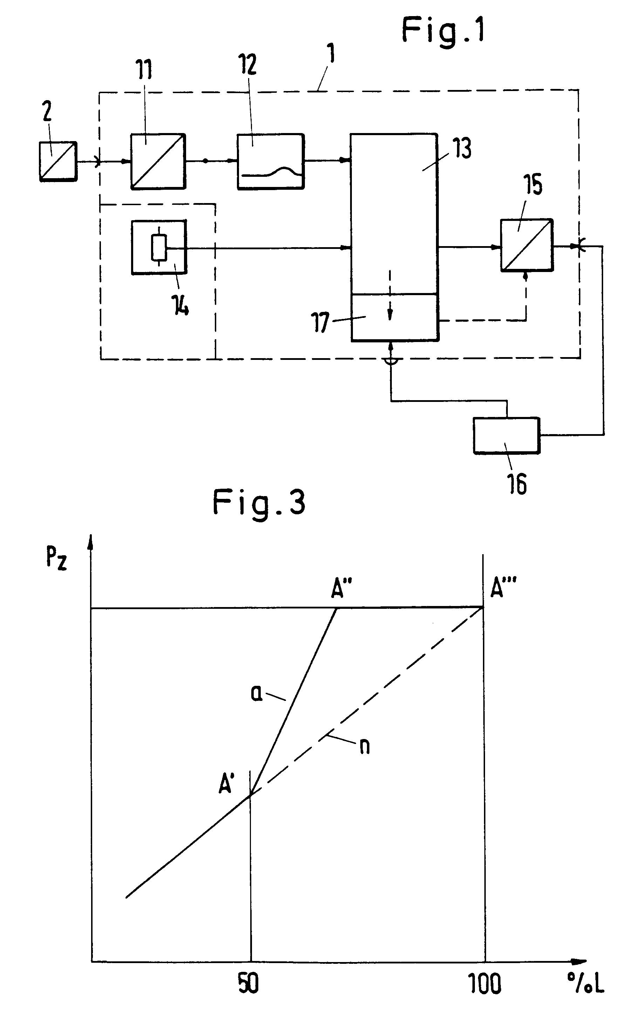

Die in Fig. 1 gezeigte Schaltung 1 zum Ermitteln der Verschiebung des Einpritzbeginns umfasst im wesentlichen einen Wandler, z.B. einen Strom-Spannungswandler 11, in welchem ein von einem Drehwinkelgeber 2 kommende Signal, welches ein Mass für Betriebszustand des Dieselmotors ist, normiert wird. In der Speicherschaltung 12, sind die Werte von Zünddruckkennlinien (Kennlinien des mittleren effektiven Drucks) des Motors gespeichert. Der Motor wird nach einer dieser gespeicherten Kennlinien betrieben. Zu jedem der Werte gehört ein bestimmter, auf den Drehwinkel $\emptyset$ (fi) der Kurbelwelle bezogener Zeitpunkt des Beginns des Einspritzvorgangs der Einspritzpumpe. Die Speicherschaltung 12 kann diesen Zeitpunkt berechnen, aber es ist auch möglich, zu jedem Betriebszustand des Dieselmotors den zugehörigen Wert des Einspritzbeginn, in der Art einer Wertetabelle zu speichern und bei Bedarf abzurufen. Der Wechsel zum Betrieb des Motors nach einer andern Ausgangkennlinie kann schaltungsmässig vorgenommen werden, wenn mehrere Kennlinien im Speicher 12 gespeichert sind. Es kann aber auch der ganze Speicher 12 in der Schaltung 1 ausgetauscht, oder neu geladen werden.

Das Signal, der Speicherschaltung wird einer Sumierschaltung 13 zugeführt. In der Sumierschaltung 13 kann das Signal, welches den Zeitpunkt des Einspritzbeginns bestimmt, mit Parameter-Signalen weiter verändert werden. So kann etwa mit einer Potentiometerschaltung 14 ein Korrekturwert eingegeben werden, der die Zündeigenschaften des gerade verwendeten Treib- oder Brennstoffs berücksichtigt. Die Parameter-Signale können sowohl an der Steuerelektronik selbst oder von einem entfernt liegenden Eingabegerät 14 eingegeben werden. Das Ausgangssignal der Sumierschaltung 13 wird dem Wandler 15 zu geführt, der das Signal für das Stellglied 16 aufbereitet. Das Stellglied 16 kann beispielsweise hydraulisch, pneumatisch oder elektromotorisch betrieben werden und mit der hier nur symbolisiert gezeichneten Stange auf die Exzenterwelle der Einspritzvorrichtung 3' einwirken und den Zeitpunkt des Einspritzbeginns verändern. Es ist auch möglich, das Stellglied 16 in einen Regelkreis einzubeziehen, bei dem die Position des Stellglieds laufend einem Regler 17 zugeführt wird, der aus der Istposition des Stellgliedes und einem vom Speicher abgerufenen Sollpositions-Signal, dem Wandler 15 laufend Korrektursignale (gestrichelte Linie) übermittelt. Bei dieser Lösung würde die direkte Verbindung zwischen Sumierschaltung 13 und Wandler 17 natürlich entfallen und umgekehrt entfällt der Regler und seine Verbindungen, wenn eine Steuerung ohne geschlossenen Regelkreis verwendet wird.

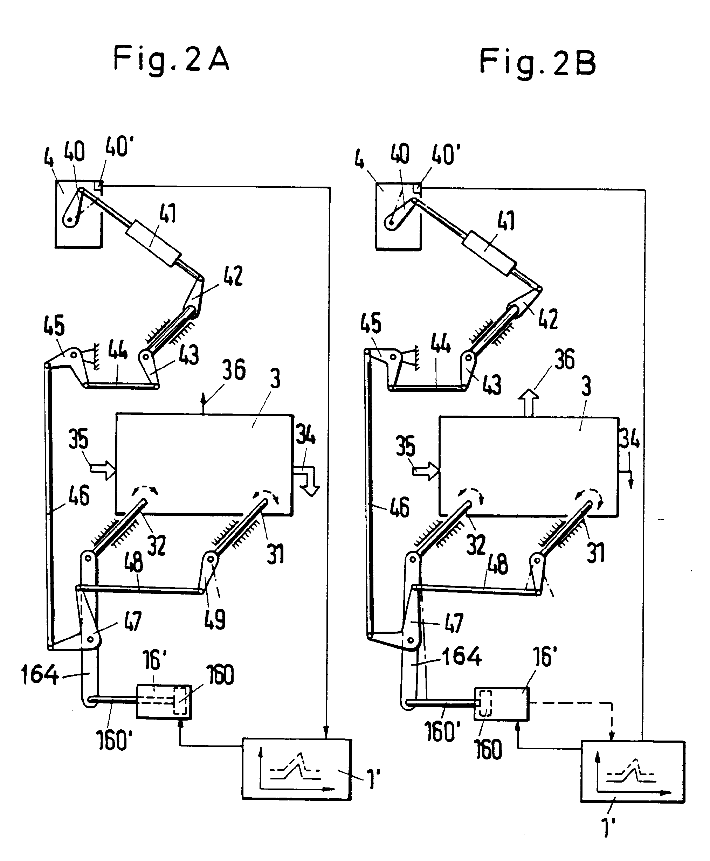

In den Fig. 2A und 2B ist die Einstellung der Einspritzpumpe 3 für zwei verschiedene Belastungszustände des Dieselmotors mit verschiedenen Zeitpunkten des Einspritzbeginns gezeigt. Der Brennstoff wird der Einspritzpumpe über die Zufuhrleitung 35 mit dem Saugventil 32 zugeführt und über die Einspritzleitung 36 in den Zylinder des Dieselmotors eingespritzt. Der Einspritzvorgang wird durch das Öffnen des Überströmventils 31 beendet und der Brennstoff fliesst dann über die Überströmleitung 34 zurück.

Der Betreibszustand des Dieselmotors wird durch die Stellung des Hebels 40 des Drehgebers 4 angezeigt der gleichzeitig über ein Gestänge mit Drehhebeln und Stangen 41, 42, 43, 44, 45, 46, 47, 48, 49, den Öffnungszeitpunkt für das Überströmventil 31 der Einspritzpumpe 3 beeinflusst, d.h. bei gleichbleibendem Einspritzbeginn das Überströmventil 31 bei höherer Leistung später und beiniedrigerer Leistung früher öffnet.

Vom Drehgeber 4, der auch einen elektrischen Winkelgeber 40' aufweist, wird das der Winkelposition des Hebels 40 entsprechende Signal der Schaltung 1' zum Verstellen des Zeitpunktes des Einspritzbeginns zugeführt. Die Schaltung 1' ermittelt dann ein Steuersignal, das die Lage des Kolbens 160 des Stellglieds 16' bestimmt. Die Kolbenstange 160' ist mit dem Hebel 164 verbunden und bewirkt beim Vor- und Rückwärtsbewegen das gleichsinnige Verändern der Steuerung der beiden Ventile 31 und 32 mit den Exzenterwellen, was die Verschiebung des Zeitpunktes des Beginns des Einspritzens, nicht aber die Einspritzdauer d.h die Einspritzmenge pro Einspritztakt der Einspritzpumpe verändert.

In Fig. 2B ist eine gegenüber Fig. 2A veränderte Winkel-Lage des Hebels 40 des Drehgebers 4 und der Lage der daran gekoppelten Stangen und Hebel 41, 42, 43, 44, 45, 46, 47, 48, 49, gezeigt. Zusätzlich ist aber auch die Lage des Hebels 164 mit der Kolbenstange 160' des Stellglieds 16' verändert. Diese Lageveränderung (eine vorherige Position ist strichpunktiert angedeutet) beeinflusst die Exzenterwellen-Steuerung der beiden Ventile 31 und 32 gleichsinnig so, dass sich der Beginn des Einspritzens, bezogen auf den Drehwinkel der Kurbelwelle des Dieselmotors, bei gleichbleibender Einspritzdauer und Einspritzmenge, zeitlich verschiebt. Die jeweilige Lage der Kolbenstange 160' des Stellglieds 16' wird durch die Schaltung 1' aufgrund des Signal für die Winkellage des Hebels 40 des Drehgebers 4 aus den im Speicher der Schaltung 1' gespeicherten Werten, z.B. einer Zünddruckkennlinie des Dieselmotors ermittelt.

Im Last-Zünddruckdiagramm ($P_z$ = mittlerer effektiver Zünddruck, L = Leistung in %) von Fig. 3 ist ein Beispiel einer Zünddruckkennlinie a dargestellt. Der von der Normalkurve n (auch Naturkurve oder Grundkurve genannt) abweichende Verlauf der Ausgangkennlinie a im Bereich zwischen 50% und 100% Leistung, d.h. zwischen den Punkten A' über A" nach A'"wird mit dem Verschieben des Zeitpunkts des Einspritzbeginns erreicht. Im Bereich unterhalb von 50% Leistung verlaufen Ausgangskennlinie a und Normalkurve n im gezeigten Beispiel gleich, was bedeutet, dass die Verschiebevorrichtung für den Einspritzbeginn in diesem Bereich nicht wirksam zu sein braucht, sondern das Stellglied eine feststehende Ausgangslage einnehmen kann. Je nach Dieselmotortyp und der Art seines Einsatzes, kann man den Motor nach einer andern Ausgangskennlinie betreiben.

## Patentansprüche

1. Verfahren zum Verändern des mittleren effektiven Drucks einer selbstzündenden Hubkolben-Brennkraftmaschine durch Verstellen des Einspritzbeginns der Brennstoff-Einspritzvorrichtung (3'), bezogen auf den Drehwinkel der Kurbelwelle, wobei laufend dem momentanen Belastungszustand der Brennkraftmaschine entsprechende elektrische Signale (2) erzeugt werden, diese Signale einer elektronischen Schaltung (1) zugeführt werden, die einen Speicher (12) aufweist, dadurch gekennzeichnet, dass darin die Werte mehrerer Kennlinien des mittleren effektiven Drucks der Brennkraftmaschine gespeichert sind, und dass die elektronische Schaltung (1) eine Schaltung (15) aufweist, welche wahlweise, aus den gespeicherten Werten einer dieser Kennlinien Signale für die Stellung der Stellglieds (16) zum Steuern des Einspritzbeginns mit einem ersten Ventil (32) und des Einspritzendes mit einem zweiten Ventil (31) erzeugt und diese Signale dem nachgeschalteten Stellglied (16) zugeführt werden und damit dessen Position bestimmen, wobei bei gleichbleibender Last die Einspritzdauer der Einspritzvorrichtung (3) gleich bleibt.

2. Verfahren Anspruch 1, dadurch gekennzeichnet, dass die Signale für die Stellung des Stellgliedes (16), in der Schaltung (1, 13) durch zugeführte Parameter-Signale (14) beeinflusst werden, und den aufgrund der Werte der Zünddruckkennlinie bestimmten Einspritzbeginn verändern.

3. Verfahren nach einem der Ansprüche 1 oder 2, dadurch gekennzeichnet, dass Änderungen des Belastungszustands der Brennkraftmaschine, die eine vorwählbare Mindestdauer nicht erreichen, nicht zu einer Veränderung des Einspritzbeginns führen.

4. Vorrichtung zum Verändern des mittleren effektiven Drucks einer selbstzündenden Hubkolben-Brennkraftmaschine mit Mitteln zum Verstellen des Einspritzbeginns der Brennstoff-Einspritzvorrichtung (3'), bezogen auf den Drehwinkel der Kurbelwelle, wobei laufend dem momentanen Belastungszustand der Brennkraftmaschine entsprechende elektrische Signale (2) erzeugt werden, diese Signale einer elektronischen Schaltung (1) zugeführt werden, die einen Speicher (12) aufweist, dadurch gekennzeichnet, dass darin die Werte mehrerer Kennlinien des mittleren effektiven Drucks der Brennkraftmaschine gespeichert sind, und dass die elektronische Schaltung (1) eine Schaltung (15) aufweist, welche Mittel aufweist, die wahlweise, aus den gespeicherten Werten einer dieser Kennlinien Signale für die Stellung der Stellglieds (16) zum Steuern des Einspritzbeginns mit einem ersten Ventil (32) und des Einspritzendes mit einem zweiten Ventil (31) erzeugt und diese Signale dem nachgeschalteten Stellglied (16) zuführt und damit dessen Position bestimmen, wobei Mittel vorgesehen sind, die bei gleichbleibender Last die Einspritzdauer der Einspritzvorrichtung (3) gleich halten.

5. Vorrichtung nach Anspruch 4, dadurch gekennzeichnet, dass der Geber (4) ein Drehwinkelgeber ist.

6. Vorrichtung nach Anspruch 4 oder 5, dadurch gekennzeichnet, dass die elektronische Schaltung einen Schaltungsmodul (13) aufweist, welchem aus den Speicherwerten erzeugte Stellsignale und Parameter-Signale (14) zugeführt werden, welche die aus den Speicherwerten (12) erzeugten Stellsignale für das Stellglied (16') verändern.

7. Vorrichtung nach Anspruch 6, dadurch gekennzeichnet, dass ein manuell bedienbares Eingabegerät (14) für die Eingabe der Parameter-Signale (14) vorhanden ist.

8. Vorrichtung nach einem der Ansprüche 4 bis 7, dadurch gekennzeichnet, dass diese ein pneumatisches Stellglied (16') aufweist.

9. Vorrichtung nach einem der Ansprüche 4 bis 7, dadurch gekennzeichnet, dass diese ein hydraulisches Stellglied (16') aufweist.

10. Vorrichtung nach einem der Ansprüche 4 bis 7, dadurch gekennzeichnet, dass diese einen elektrischen Schrittmotor als Stellglied (16') aufweist.

11. Vorrichtung nach einem der Ansprüche 4 bis 10, dadurch gekennzeichnet, dass das Stellglied (16) einen elektrischen Positionsgeber aufweist, der ein die Lage des Stellglieds charakteristisches Signal erzeugt.

12. Vorrichtung nach Anspruch 11, dadurch gekennzeichnet, dass Stellglied (16') und elektronische Schaltung (1') Teile eines Regelkreises (1', 16') für die Regelung der Lage des Stellglieds (16') sind.

## Claims

1. Method of altering the mean effective pressure in self-igniting reciprocating combustion engine by adjusting the start of injection by the fuel injection equipment (3') with respect to the angle of rotation of the crankshaft, where electrical signals (2) corresponding with the intantaneous state of load on the combustion engine are continously generated and these signals are fed to an electronic circuit (1) which exhibits a memory (12), characterised in that the latter the values of a number of characteristic curves of the mean effective pressure of the combustion engine are stored and that the electronic circuit (1) exhibits a circuit (15) which from the stored values of one of these characteristic curves generates at option signals for the positioning of the positioning element (16) for controlling the start of injection by a first valve (32) and the end of injection by a second valve (31) and these signals are fed to the succeeding positioning element (16) and thus determine its position, so that while the load remains the same the duration of injection by the injection equipment (3) remains the same.

2. A method as in Claim 1, characterized in that the signals for the positioning of the positioning element (16) are influenced in the circuit (1, 13) by parameter signals (14) being fed in, and alter the start of injection determined on the basis of the values from the ignition pressure characteristic curve.

3. A method as in one of the Claims 1 or 2, characterized in that alterations in the state of load on the combustion engine, which do not reach a preselectable minimum duration, do not lead to an alteration in the start of injection.

4. A device for altering the mean effective pressure in a self-igniting reciprocating combustion engine having means of adjusting the start of injection by the fuel injection equipment (3') with respect to the angle of rotation of the crankshaft, where electrical signals (2) corresponding with the instantaneous state of load on the combustion engine are continuously generated and these signals are fed to an electronic circuit (1) which exhibits a memory (12), characterized in that in the latter the values of a number of characteristic curves of the mean effective pressure of the combustion engine are stored and that the electronic circuit (1) exhibits a circuit (15) which exhibits means which from the stored values of one of these characteristic curves generate at option signals for the positioning of the positioning element (16) for controlling the start of injection by a first valve (32) and the end of injection by a second valve (31) and feed these signals to the succeeding positioning element (16) and thus determine its position, means being provided which while the load remains the same keep the duration of injection by the injection equipment (3) the same.

5. A device as in Claim 4, characterized in that the transmitter (4) is an angle-of-rotation transmitter.

6. A device as in Claim 4 or 5, characterized in that the electronic circuit exhibits a circuit module (13) to which are fed positioning signals generated from the stored values and parameter signals (14) which alter the positioning signals generated from the stored values (12) for the positioning element (16').

7. A device as in Claim 6, characterized in that there is a manually operable input apparatus (14) for the input of the parameter signals (14).

8. A device as in one of the Claims 4 to 7, characterized in that it exhibits a pneumatic positioning element (16').

9. A device as in one of the Claims 4 to 7, characterized in that it exhibits a hydraulic positioning element (16').

10. A device as in one of the Claims 4 to 7, characterized in that it exhibits an electric stepping motor as positioning element (16′).

11. A device as in one of the Claims 4 to 10, characterized in that the positioning element (16) exhibits an electric position transmitter which generates a signal characteristic of the position of the positioning element.

12. A device as in Claim 11, characterized in that the positioning element (16′) and electronic circuit (1′) are parts of a control loop (1′, 16′) for control of the position of the positioning element (16′).


**Revendications**

1. Procédé permettant la modification de la pression moyenne effective d'un moteur à combustion interne à pistons alternatifs à auto-allumage, la modification étant effectuée grâce au décalage, par rapport à l'angle de rotation du vilebrequin, du début d'injection du dispositif (3′) d'injection du carburant, des signaux électriques (2) correspondant à l'état de charge momentané du moteur à combustion étant générés en permanence et étant transmis à un dispositif électronique (1) de commande, qui comprend une mémoire (12), caractérisé en ce qu'il conserve en mémoire les valeurs de plusieurs courbes caractéristiques de la pression moyenne effective du moteur à combustion interne, et en ce que le dispositif électronique (1) de commande comporte un circuit (15) qui, à partir des valeurs enregistrées en mémoire correspondant à l'une de ces courbes caractéristiques, au choix, génère des signaux pour l'orientation du servoélément (16) destiné à commander, à l'aide d'une première soupape (32), le début d'injection et, à l'aide d'une deuxième soupape (31), la fin d'injection, et qui transmet ces signaux au servoélément (16) disposé en aval et détermine, de ce fait, la position de ce dernier, la durée d'injection du dispositif (3) d'injection restant constante à charge constante.

2. Procédé selon la revendication 1, caractérisé en ce que les signaux définissant la position du servoélément (16) sont influencés, dans les dispositifs (1, 13) de commande, par des signaux externes (14) de paramètres, et modifient le début d'injection déterminé en fonction des valeurs de la courbe caractéristique de pression d'allumage.

3. Procédé selon une des revendications 1 ou 2, caractérisé en ce que des variations de l'état de charge du moteur à combustion interne, qui n'atteignent pas une durée minimale prédéfinissable, n'entraînent pas de modification du début d'injection.

4. Dispositif permettant la modification de la pression moyenne effective d'un moteur à combustion interne à pistons alternatifs à auto-allumage, comprenant des moyens pour décaler, par rapport à l'angle de rotation du vilebrequin, le début d'injection du dispositif (3′) d'injection de carburant, des signaux électriques (2) correspondant à l'état de charge momentané du moteur à combustion étant générés en permanence et étant transmis à un dispositif électronique (1) de commande, qui comprend une mémoire (12), caractérisé en ce que le dispositif conserve en mémoire les valeurs de plusieurs courbes caractéristiques de la pression moyenne effective du moteur à combustion interne, et en ce que le dispositif électronique (1) de commande comporte un circuit (15) qui comporte des moyens qui, à partir des valeurs enregistrées en mémoire correspondant à l'une de ces courbes caractéristiques, au choix, génèrent des signaux pour l'orientation du servoélément (16) destiné à commander, à l'aide d'une première soupape (32), le début d'injection et, à l'aide d'une deuxième soupape (31), la fin d'injection, et qui transmettent ces signaux au servoélément (16) disposé en aval et déterminent, de ce fait, la position de ce dernier, des moyens étant prévus qui, à un taux de charge constant, maintiennent la durée d'injection du dispositif (3) d'injection à un niveau constant.

5. Dispositif selon la revendication 4, caractérisé en ce que le dispositif transmetteur (4) est un transmetteur d'angle de rotation.

6. Dispositif selon la revendication 4 ou 5, caractérisé en ce que le dispositif de commande électronique comporte un module (13) de commande, auquel sont transmis des signaux de commande dérivés des valeurs enregistrées en mémoire ainsi que des signaux indicateurs des paramètres (14), qui modifient les signaux de commande dérivés des valeurs enregistrées en mémoire (12), destinés au servoélément (16′).

7. Dispositif selon la revendication 6, caractérisé en ce qu'un organe (14) d'entrée à commande manuelle, permettant d'entrer les signaux indicateurs de paramètres (14), est prévu.

8. Dispositif selon une des revendications 4 à 7, caractérisé en ce qu'il comporte un servoélément pneumatique (16′).

9. Dispositif selon une des revendications 4 à 7, caractérisé en ce qu'il comporte un servoélément hydraulique (16′).

10. Dispositif selon une des revendications 4 à 7, caractérisé en ce qu'il comporte un servoélément (16′) sous forme d'un moteur électrique pas à pas.

11. Dispositif selon une des revendications 4 à 10, caractérisé en ce que le servoélément (16) comporte un transmetteur électrique de position, qui génère un signal indicateur de la position du servoélément.

12. Dispositif selon la revendication 11, caractérisé en ce que le servoélément (16') et le dispositif (1') de commande électronique font partie d'un circuit de régulation (1', 16') destiné à régler la position du servoélément (16').

# Fig.1

# Fig.3

# Fig. 2 A

# Fig. 2 B